# EUROPÄISCHE PATENTSCHRIFT

(11) **EP 2 016 814 B1**
(45) Veröffentlichungstag und Bekanntmachung des Hinweises auf die Patenterteilung: **24.11.2010**
(21) Anmeldenummer: 08156947.7
(22) Anmeldetag: 27.05.2008
(51) Int. Cl.: A01B 21/04, A01B 29/00, A01B 29/06, A01B 33/02, A01B 45/02

(54) **Bodenbearbeitungsgerät mit vorgespanntem Rollen- oder Walzenelement**
Soil work device with pre-tensed roller element
Appareil de traitement des sols doté d'un élément de rouleaux ou de cylindres

(30) Priorität: 14.06.2007 DE 102007027422
(43) Veröffentlichungstag der Anmeldung: 21.01.2009
(73) Patentinhaber: Wiedenmann GmbH, 89192 Rammingen (DE)
(72) Erfinder:
(74) Vertreter: Kastel, Stefan

(56) Entgegenhaltungen:
- EP-A- 0 399 622
- EP-A- 1 340 418
- AU-A- 5 434 286
- DE-A1- 4 229 823
- US-A- 4 776 404
- US-A1- 2005 161 236

## Beschreibung

Die Erfindung betrifft ein in einer Bewegungsrichtung bewegbares Bodenbearbeitungsgerät, insbesondere für die Glättung, Lockerung und/oder Belüftung von Böden, mehr insbesondere von Rasenflächen, mit den Merkmalen des Oberbegriffes des hier beigefügten Patentanspruches 1.

Ein solches Gerät wird zur Zeit von der Firma Wiedenmann GmbH unter der Bezeichnung TERRA COMBI im Handel angeboten.

Um Rasenflächen, insbesondere auf zum Sport freigegebenen Flächen, gesund zu erhalten, ist eine Lockerung des Bodens, auch unterhalb der Grasnarbe vorteilhaft. Hierzu gibt es unterschiedliche Techniken. In der Regel wird mittels Stechwerkzeugen in die Grasnarbe eingestochen, wobei die Stechwerkzeuge im eingestochenem Zustand verschwenkt werden. Dies schafft einerseits Belüftungslöcher. Andererseits wird durch die Verschwenkung der Stechwerkzeugspitze unterhalb der Grasnarbe der Boden gelockert.

Um diesen Vorgang durchführen zu können, gibt es Bodenbearbeitungsgeräte, die Rollen- oder Walzenelemente haben, die sich bei Bewegung des Bodenbearbeitungsgerätes über dem Boden abrollen. Dabei sind an einer Umfangsfläche der Rollen- oder Walzenelemente Stechwerkzeuge, beispielsweise Stacheln oder Zinken mit spitzen Enden, in einer radialen Richtung abstrebend angeordnet.

Das Bodenbearbeitungsgerät insgesamt und/oder die Rollen- oder Walzenelemente haben eine entsprechende Masse, um die Stechwerkzeuge beim Abrollen in den Boden zur drängen. Bei Drehung des Rollen- oder Walzenelementes wird das eingestochene Stechwerkzeug dann entsprechend der Drehung verschwenkt, bis es wieder aus dem Boden austritt. Derartige Roll- oder Walzenelemente werden auch "Igelwalzen" genannt. Die Bodenbearbeitungsgeräte sind beispielsweise an ein Zugfahrzeug, wie beispielsweise einen Traktor, anlenkbar.

Bei bisher von der Firma Wiedenmann GmbH mit entsprechenden Walzenelementen ausrüstbaren Geräten, die unter dem Produktnamen TERRA COMBI auf dem Markt erhältlich sind, werden mehrere Werkzeugeinheiten, die jeweils eine Lagereinrichtung und eine daran frei drehbar gelagerte Igelwalze als Rollen- oder Walzenelement aufweisen, an einem Geräterahmen angelenkt. Um eine größere Breite auch bei unebenen Boden bearbeiten zu können, sind mehrere Werkzeugeinheiten in einer Richtung quer zur Bewegungsrichtung versetzt angeordnet. Um sich den Bodenunebenheiten anpassen zu können, ist jede dieser Werkzeugeinheiten gegenüber dem Geräterahmen heb- und senkbar angelenkt. Die Walzen sind frei drehbar, so dass eine einfache Konstruktion ohne Selbstantrieb der Walzen geschaffen ist. Aufgrund der freien Drehbarkeit passt sich die Drehgeschwindigkeit der Rollen der Relativbewegung zum Boden an, so dass Beschädigungen einer Grasnarbe gering gehalten werden. Um die Walzen frei drehbar lagern zu können und dennoch eine Bearbeitung über eine durchgängige Breite ermöglichen zu können, sind beispielsweise drei Werkzeugeinheiten angeordnet, die nicht nur in Querrichtung, sondern auch in Bewegungsrichtung zueinander versetzt sind. Auf diese Weise hat man links und rechts der Walzen Platz für deren Lagerung und kann dennoch die gesamte Breite abdecken. Die Werkzeugeinheiten sind unabhängig voneinander relativ zu dem Geräterahmen bewegbar, so dass eine Anpassung an Bodenunebenheiten möglich ist.

Aus der EP0 399 622 ist eine Bodenbearbeitungseinrichtung mit walzenartigen Bodenbearbeitungswerkzeugen bekannt, die in einer Breitenrichtung eines an einen Traktor anlenkbaren Bodenbearbeitungsgeräts nebeneinander angeordnet sind und jeweils zueinander kippbar aneinander angelenkt sind.

Diese Bodenbearbeitungseinrichtung nach dem Dokument EP0 399 622 A1 bildet somit den Oberbegriff des beigefügten Patentanspruches 1.

Ausgehend von diesem Stand der Technik ist es Aufgabe der Erfindung, ein Bodenbearbeitungsgerät der im Oberbegriff des Patentanspruchs 1 genannten Art derart weiter zu entwickeln, dass es ohne Funktionsbeeinträchtigung kostengünstiger herstellbar und in kompakterem Ausmaß ausführbar ist.

Diese Aufgabe wird durch ein Bodenbearbeitungsgerät mit den Merkmalen des Patentanspruches 1 gelöst.

Vorteilhafte Ausgestaltungen der Erfindung sind Gegenstand der Unteransprüche.

Die Erfindung schafft demnach ein Bodenbearbeitungsgerät, vorzugsweise für die Glättung, Lockerung und/oder Belüftung von Böden. Das Bodenbearbeitungsgerät soll in bevorzugter Ausgestaltung beispielsweise für das Einbringen von Belüftungslöchern verbunden mit einer Lockerung des Bodens im Bereich der Grasnarbe geeignet sein. Das Bodenbearbeitungsgerät kann selbstfahrend ausgestaltet sein oder an ein Fahrzeug oder an einen Anhänger als Nachlaufgerät anhängbar sein oder in sonstiger Weise zur Bewegung in einer Bewegungsrichtung bewegbar ausgebildet sein.

Das erfindungsgemäße Bodenbearbeitungsgerät ist weiter mit mehreren Wellen-, Rollen- oder Walzenelementen zur Bodenbearbeitung versehen. Die Wellen-, Rollen- oder Walzenelemente sind zur Bodenbearbeitung drehbar gelagert, vorzugsweise derart dass sie bei Bewegung des Bodenbearbeitungsgerätes über den Boden rollen können. An der Umfangsfläche sind vorzugsweise Stechwerkzeuge angeordnet, die zum Einstechen in den Boden ausgebildet sind. Aber auch eine Ausführung mit glatten Umfangsflächen zur Glättung des Bodens ist denkbar.

Um eine Anpassung an Bodenunebenheiten zu ermöglichen, ist das erfindungsgemäße Bodenbearbeitungsgerät mit mehreren Werkzeugeinheiten versehen, die jeweils wenigstens ein solches Wellen-, Rollen- oder Walzenelement aufweisen, so dass die Werkzeugeinheiten in einer im wesentlichen quer zur Bewegungsrichtung verlaufenden Richtung gesehen aufeinander folgend nebeneinander angeordnet sind. Es ist weiter ein Geräterahmen zum Anlenken der Werkzeugeinheiten vorgesehen.

Erfindungsgemäß ist nun weiter eine Mehrzahl (d.h. wenigstens zwei) erste Werkzeugeinheiten vorgesehen, die kipp- und oder schwenkbar an dem Geräterahmen oder an damit fest verbundenen Teilen unmittelbar angelenkt sind. Es ist aber weiter noch wenigstens eine zweite Werkzeugeinheit vorgesehen, die zwischen solchen ersten Werkzeugeinheiten angeordnet ist. Die wenigstens eine zweite Werkzeugeinheit ist (lediglich) mittelbar über wenigstens eine der ersten Werkzeugeinheit mit dem Geräterahmen verbunden. Die Anlenkung zwischen den benachbarten Werkzeugeinheiten erfolgt derart, dass sie zueinander kipp-und/oder schwenkbar sind. Aufgrund der kipp- und/oder schwenkbaren Anlenkung der ersten Werkzeugeinheit an dem Geräterahmen und der hierzu kipp-und/oder schwenkbaren Anlenkung der zweiten Werkzeugeinheit an der ersten Werkzeugeinheit kann eine mehr im mittleren Bereich zwischen zum Beispiel zwei ersten Werkzeugeinheiten angeordnete zweite Werkzeugeinheit sich entsprechend weiter, insbesondere nach oben und nach unten, auslenken, ohne dass kompliziertere Anlenkmechanismen eingesetzt werden müssten, wie dies bei einer unmittelbaren Anlenkung von mittleren Werkzeugeinheiten an dem Geräterahmen der Fall wäre. Die wenigstens eine zweite Werkzeugeinheit hat somit einen größeren Freiheitsgrad, ohne die Anlenkmechanismen zu verkomplizieren. Weiter können so die Werkzeugeinheiten dichter zueinander geführt werden, eine Versetzung in Bewegungsrichtung gesehen ist nicht notwendig.

Aufgrund der größeren Freiheit in der Bewegung der wenigstens einen zweiten Werkzeugeinheit lässt sich eine besonders gute Bodenanpassung erreichen. Dies birgt aber auch den Nachteil, dass es schwierig ist, für einen einheitlichen Bodendruck durch die Rollen- oder Walzenelemente und damit insbesondere für eine einheitliche Eindringtiefe der Stechwerkzeuge (z.B. im Falle der Verwendung von Igelwalzen) zu sorgen.

Je nach Art des Bodens können die Kräfte, die zum Einstechen der Stechwerkzeuge aufgewandt werden müssen, beträchtlich sein.

Im Prinzip könnte man dies dadurch erreichen, dass man die Walzenelemente selbst alle sehr massiv ausführt, was aber zu erheblichen Herstellkosten und einem großen Aufwand bei der Herstellung, Montage und Handhabung des Gerätes führen würde.

Ein anderer prinzipiell möglicher Weg ginge dahin, den Geräterahmen zusätzlich durch Gewichte oder dergleichen zu belasten. Dies führt bei einer beweglichen Anlenkung von ersten Werkzeugeinheiten, an die wiederum eine zweite Werkzeugeinheit beweglich angelenkt ist, jedoch nicht zu dem erwünschten Erfolg, da dann aufgrund der Reaktionskräfte auf die zweite Werkzeugeinheit diese nicht so tief in den Boden eindringt und zusätzlich noch die ersten Werkzeugeinheiten verkippt werden. Dies führt über die Bearbeitungsbreite gesehen zu einer ungleichmäßigen Bodenbelastung und insbesondere im Falle von Igelwalzen zu unterschiedlichen Eindringtiefen und einer ungleichmäßigen Bodenbearbeitung.

Um dennoch ein entsprechendes Gerät mit einfacherer Ausführung und erhöhter Anpassungsfähigkeit an Bodenunebenheiten vorzusehen, das in der Funktion auch hinsichtlich der Gleichmäßigkeit bei der Bodenbearbeitung vergleichbar zu den eingangs erwähnten Geräten mit jeweils eigener Anlenkung der Werkzeugeinheiten unmittelbar an dem Geräterahmen ausgebildet ist, ist erfindungsgemäß weiter vorgesehen, dass der Anlenkbereich der ersten Werkzeugeinheit, an der die zweite Werkzeugeinheit angelenkt ist, relativ zu dem Geräterahmen in Richtung Boden elastisch vorgespannt ist.

Der Anlenkbereich wird somit zusätzlich mit einer vorzugsweise elastischen Kraft in Richtung Boden beaufschlagt. Diese zusätzliche Kraft spannt über den Anlenkbereich auch die zweite Werkzeugeinheit in Richtung Boden vor und drückt so zum Beispiel die Stechwerkzeuge auch der zweiten Werkzeugeinheit in den Boden hinein. Dadurch lässt sich eine gleichmäßigere Eindringtiefe über die gesamte Bearbeitungsbreite erzielen oder allgemeiner gesehen eine gleichmäßige Bodenbearbeitung über die gesamte Bearbeitungsbreite gesehen erzielen.

Ein besonders kompakter Aufbau ist erreichbar, wenn, wie bei einer vorteilhaften Ausführungsform vorgesehen, die Werkzeugeinheiten im wesentlichen zueinander ausgerichtet sind, beispielsweise auf einer quer zur Bewegungsrichtung verlaufenden Linie liegen und/oder quer zur Bewegungsrichtung aufeinanderfolgend nebeneinander angeordnet sind. Wenngleich auch Ausführungsformen mit gewissen Versetzungen zwischen den Drehachsen der einzelnen Rollen- oder Walzeneinheiten in Bewegungsrichtung und/oder in einer vertikalen Richtung denkbar sind, so wird die Gesamtkonstruktion doch einfacher aufbaubar und einfacher beherrschbar und handhabbar und auch kompakter aufbaubar, wenn die Drehachsen normalerweise im wesentlichen konzentrisch zueinander ausgerichtet sind. Jedoch ist für ein Rollen über unebenen Boden die Möglichkeit der Verkippung der Werkzeugeinheiten zueinander gegeben, wodurch dann auch die Drehachsen zueinander verkippbar sind.

Wenngleich grundsätzlich auch Ausführungen mit Drehantrieb für die Wellen-, Rollen- oder Walzenelemente denkbar sind, so sind in bevorzugter Ausgestaltung die jeweiligen Wellen-, Walzen- oder Rollenelemente frei drehbar, so dass ihr Abrollen in einfacher Weise aufgrund der Bewegung des Bodenbearbeitungsgerätes über den Boden erfolgt. Dadurch passt sich die Drehbewegung in einfachster Weise der Bewegungsgeschwindigkeit an und Verletzungen der Grasnarbe werden so gering wie möglich gehalten. Wenn nun, wie bei einer besonders bevorzugten Ausgestaltung vorgesehen, die Werkzeugeinheiten jeweils eine drehfeste Lagereinrichtung und wenigstens eines der Walzen- oder Rollelemente aufweisen, dann kann die Anpassung an Bodenunebenheiten bei einer solchen Ausgestaltung mit recht einfach ausgestatteten Kipp- oder Schwenkanlenkungen dadurch realisiert werden, dass die Lagereinrichtungen im Grunde relativ zu dem Geräterahmen drehfest, aber kipp- und/oder schwenkbar oder anheb- oder senkbar angelenkt sind, wobei das wenigstens eine Wellen-, Rollen-oder Walzenelement auf der jeweiligen Lagereinrichtung dann drehbar gelagert ist. Die Lagereinrichtungen der ersten Werkzeugeinheiten können dabei jeweils unmittelbar an dem Geräterahmen befestigt sein. Und die Lagereinrichtung der zweiten Werkzeugeinheit kann an dem Geräterahmen mittelbar, nämlich über wenigstens eine Lagereinrichtung einer der ersten Werkzeugeinheiten angelenkt sein.

Der Aufbau der Lagereinrichtungen kann unterschiedlich sein. Vorzugsweise ist zumindest bei einer der Werkzeugeinheiten, insbesondere bei allen ersten Werkzeugeinheiten, ein Rahmenelement vorgesehen, welches zur sicheren Befestigung insbesondere die die Kräfte übertragenden ersten Werkzeugeinheiten versteift und über entsprechende Kipp- oder Schwenklager an dem Geräterahmen anlenkbar ist. Die Lagereinrichtungen können insbesondere ein Achselement aufweisen, auf dem das wenigstens eine Walzen- oder Rollenelement beispielsweise unter Zwischenlagerung von Wälzkörperdrehlagern oder Gleitlagern aufgesetzt ist. Beispielsweise kann es sich bei dem Achselement um ein durch ein Walzen- oder Rollenelement hin durchgeführtes Stangenelement handeln, welches an den Endbereichen aufgehängt ist.

Zur Verkürzung der Kraftwege ist bevorzugt, wenn die jeweiligen freien Enden eines Achselements der zweiten Werkzeugeinheit unmittelbar an zueinander gerichtete Endbereiche von zwei ersten Werkzeugeinheiten angelenkt ist.

Um eine gute Bodenanpassung zu erreichen, ist weiter bevorzugt, dass die ersten Werkzeugeinheiten an einem mittleren Bereich kipp- und/oder schwenkbar mit dem Geräterahmen verbunden sind. Je nach Beschaffenheit und Schräglage des Bodens können die ersten Werkzeugeinheiten dann mit dem ersten oder dem zweiten Endbereich nach oben kippen oder schwenken.

Weiter bevorzugt ist dann an einem ersten Endbereich die zweite Werkzeugeinheit angelenkt. Mit anderen Worten wirkt dieser erste Endbereich als Anlenkbereich und ist dann auch entsprechend in Richtung Boden vorgespannt.

Es sind - insbesondere bei besonders breiter Ausbildung des Bodenbearbeitungsgeräts - auch Ausführungen denkbar, wo auch an dem zweiten Endbereich einer ersten Werkzeugeinheit noch eine zweite Werkzeugeinheit angelenkt ist. Eine bessere Anpassung an Bodenunebenheiten sowie eine einfachere Ausbildung erreicht man jedoch dann, wenn man den jeweiligen zweiten Endbereich, welcher entgegengesetzt zu dem Anlenkbereich angeordnet ist, als freien Endbereich belässt. Es ist auch grundsätzlich denkbar, dass zwischen zwei ersten Werkzeugeinheiten noch zwei zweite Werkzeugeinheiten angelenkt sind, die zusätzlich noch untereinander gelenkig verbunden sind, jedoch an dem Geräterahmen nur mittelbar über die ersten Werkzeugeinheiten angelenkt sind. Eine solche Ausführung würde eine bessere Anpassung an Bodenunebenheiten auch bei sehr großen Breiten bringen, jedoch würde dies auf Kosten der Einheitlichkeit der Einstechtiefe über die Bearbeitungsbreite gehen. Es ist daher bevorzugt, dass zwischen zwei ersten Werkzeugeinheiten nur eine zweite Werkzeugeinheit angelenkt ist, die mit ihren jeweiligen Endbereichen an die sich außenseitig anschließenden ersten Werkzeugeinheiten angelenkt ist. Für eine größere Breite könnten dann mehrere dieser aus ersten und zweiten Werkzeugeinheiten gebildeten Gesamteinheiten nebeneinander vorgesehen sein. Auch möglich sind Ausführungen mit einer Art Fünfer-Kette, wo insgesamt drei erste Werkzeugeinheiten kipp- oder schwenkbar an dem Geräterahmen angelenkt sind, und zwischen den randseitigen ersten Werkzeugeinheiten und der mittleren ersten Werkzeugeinheit jeweils eine zweite Werkzeugeinheit angelenkt ist. In gleicher Weise sind 7er-, 9er-, 11 er-Ketten und so weiter aufbaubar.

Eine Vorspanneinrichtung zum Vorspannen des Anlenkbereiches in Richtung Boden kann unterschiedlich ausgebildet sein. Sie ist bevorzugt derart ausgebildet, dass die erste Werkzeugeinheit in einer ihrer Kipp- oder Schwenkrichtungen in Richtung Boden vorgespannt ist. Dies kann beispielsweise durch Druckfedern, durch Zugfedern und/oder durch Torsionsfeder erreicht werden. Besonders sind Zugfedern bevorzugt, die an einem freien Endbereich von ersten Werkzeugeinheiten angreifen. Die Zugfedern sind dort leicht zwecks Montage oder zum Austausch oder zu Wartungszwecken erreichbar. Außerdem hat man am Endbereich des Gerätes mehr Platz und Bauraum zum Vorsehen solcher Vorspanneinrichtungen.

Auch die Anlenkung zwischen ersten und zweiten Werkzeugeinheiten kann unterschiedlich ausgebildet sein. Beispielsweise könnte ein Kugelgelenklager vorgesehen sein, welches eine Auslenkung nach oben und nach unten und nach vorne und nach hinten ermöglicht. Zur Bodenanpassung reicht aber auch ein Lager aus, welches ein Verschwenken oder ein Verkippen nur um eine im wesentlichen parallel zur Bewegungsrichtung verlaufende Achse zulässt und entsprechend einfach ausgebildet sein kann. Grundsätzlich ist bevorzugt, dass das Kippen oder Schwenken aller Werkzeugeinheiten relativ zueinander und/oder zu dem Geräterahmen um eine in Bewegungsrichtung gerichtete Achse herum und demnach in einer quer zur Bewegungsrichtung verlaufenden Ebene erfolgt. Dadurch lassen sich Verspannungen im Gerät beim Verkippen oder Verschwenken am effektivsten vermeiden.

Vorzugsweise sind die Werkzeugeinheiten so aneinander angelenkt, dass auch ein gewisses Spiel in Drehachsrichtung zugelassen wird, um die bei Verkippen der Werkzeugeinheiten untereinander und zum Geräterahmen auftretende Längenänderung in dieser Achsrichtung aufzunehmen. In besonders bevorzugter Ausgestaltung ist hierzu wenigstens eine einem Verbindungsbereich zwischen zwei benachbarten Werkzeugeinheiten zugeordnete Längenausgleichseinrichtung vorgesehen. Diese kann beispielsweise durch ein ein Spiel in einer in der Kipp- oder Schwenkebene verlaufenden Richtung zulassendes Gelenk zwischen den Werkzeugeinheiten gebildet sein.

Ein Ausführungsbeispiel der Erfindung wird nachfolgend anhand der beigefügten Zeichnung näher erläutert. Darin zeigt:
- Fig. 1: eine perspektivische Ansicht einer Ausführungsform eines Bodenbear-beitungsgerätes von hinten und von der linken Seite mit Nachlaufgerät;
- Fig. 2: eine Vorderansicht des Bodenbearbeitungsgeräts von Fig. 1;
- Fig. 3: eine geschnittene Rückansicht des Bodenbearbeitungsgeräts, wobei eine Schnittlinie durch Walzenelemente geführt ist;
- Fig. 4: eine perspektivische Ansicht eines seitlichen Endbereiches des Bodenbearbeitungsgeräts von vorne, oben und von der Seite gesehen;
- Fig. 5: eine teilsgeschnittene perspektivische Ansicht durch eine Werkzeugeinheit des Bodenbearbeitungsgeräts mit Walzenelement und Lagereinrichtung hierfür;
- Fig. 6: eine Ansicht vergleichbar zu Fig. 5, wobei verdeckte Elemente durch gestrichelte Linien dargestellt sind;

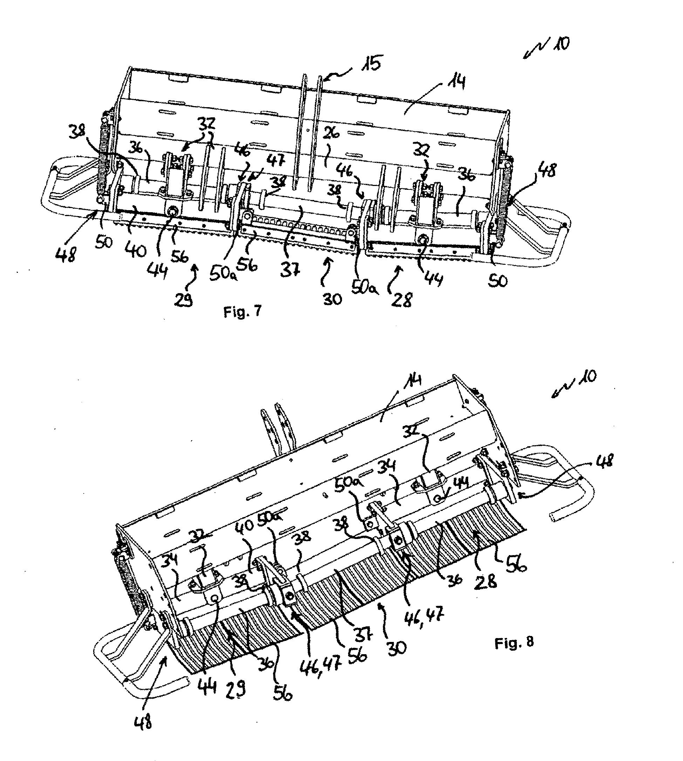

- Fig. 7: eine weitere perspektivische Vorderansicht des Bodenbearbeitungsgeräts;
- Fig. 8: eine perspektivische Rückansicht des Bodenbearbeitungsgeräts ohne Walzenelemente;

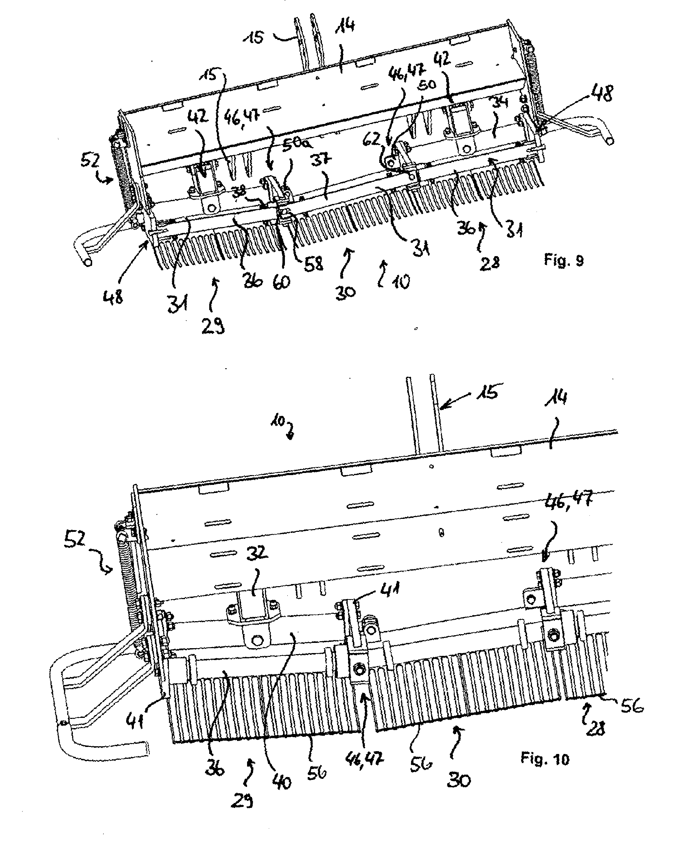

- Fig. 9: eine Ansicht vergleichbar der Fig. 8, wobei Achselemente der Lagereinrichtungen der einzelnen Werkzeugeinheiten genauer dargestellt sind und
- Fig. 10: der linke Endbereich der Darstellung von Fig. 8 in größerem Detail.

Die hier beigefügten Figuren zeigen verschiedene Ansichten einer bevorzugten Ausführung eines Bodenbearbeitungsgerätes 10, welches mit mehreren Walzenelementen, beispielsweise in Form von Igelwalzen 12, zur Bodenbearbeitung, wie insbesondere zur Lockerung und Lüftung von Rasenflächen, versehen ist.

Das Bodenbearbeitungsgerät 10 weist einen Geräterahmen 14 auf, der mittels üblicher Anschlusselemente 16 an einen hinteren Dreipunktsanschluss eines Traktors (nicht dargestellt) anschließbar ist.

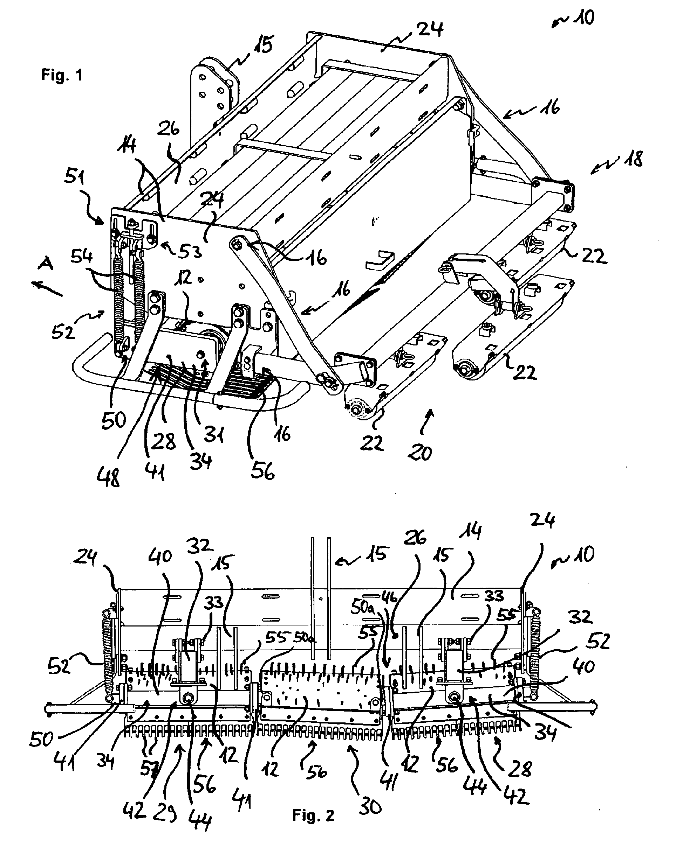

Wie aus Fig. 1 ersichtlich ist der Geräterahmen 12 mit Befestigungseinrichtungen 16 zum Befestigen von Nachlaufgeräten 18 versehen. Solche Nachlaufgeräte können beispielsweise Nachsaateinheiten oder Sandbürsteinheiten oder, wie hier dargestellt, eine Nachlaufwalzeneinheit 20 mit mehreren Nachlaufwalzen 22 sein, die durch Pflegemaßnahmen entstandene Unebenheiten sofort wieder ausgleichen.

Der Geräterahmen 14 weist, wie am besten aus einem Vergleich der Figuren 1 und 2 ersichtlich ist, zwei endseitige Plattenelemente 24 sowie diese Plattenelemente 24 verbindende Verbindungselemente, wie insbesondere Querträger 26, beispielsweise in Form von Rechteck-Balken und/oder von Rohren, auf. Der Geräterahmen 14 kann noch weitere hier nicht näher erläuterte fest mit den Plattenelementen und/oder Querträgern 26 verbundene Teile aufweisen.

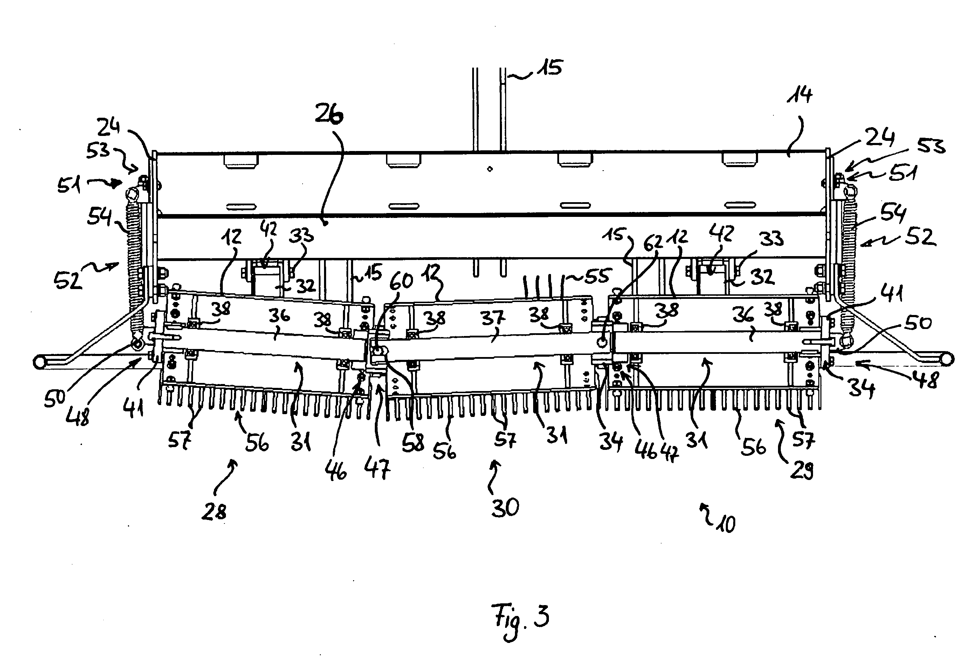

Wie am besten aus den Figuren 2 und 3 ersichtlich weist die hier dargestellte Ausführungsform des Bodenbearbeitungsgerätes 10 zwecks Anlenkung von Rollen- oder Walzenelementen, insbesondere der Igelwalzen 12, insgesamt drei Werkzeugeinheiten 28, 29 und 30 auf. Jede Werkzeugeinheit 28, 29, 30 weist eine nicht-drehbar unmittelbar oder mittelbar an dem Geräterahmen 14 angelenkte Lagereinrichtung 31 und wenigstens ein an der Lagereinrichtung 31 drehbar gelagertes Wellen-, Rollen- oder Walzenelement, in unserem Beispiel jeweils eine Igelwalze 12, auf.

Die beiden endseitigen ersten Werkzeugeinheiten 28 und 29 sind über Kipplagereinrichtungen 32 schwenk- oder kippbar mit dem Geräterahmen 14 verbunden. Bei der dargestellten Ausführungsform sind die Kipplagereinrichtungen 32, insbesondere mittels Schrauben 33, lösbar befestigt.

Die zwischen den beiden ersten Werkzeugeinheiten 28, 29 angeordnete zweite Werkzeugeinheit 30 ist an den beiden ersten Werkzeugeinheiten 28, 29 angelenkt und damit nur mittelbar mit dem Geräterahmen 14 verbunden.

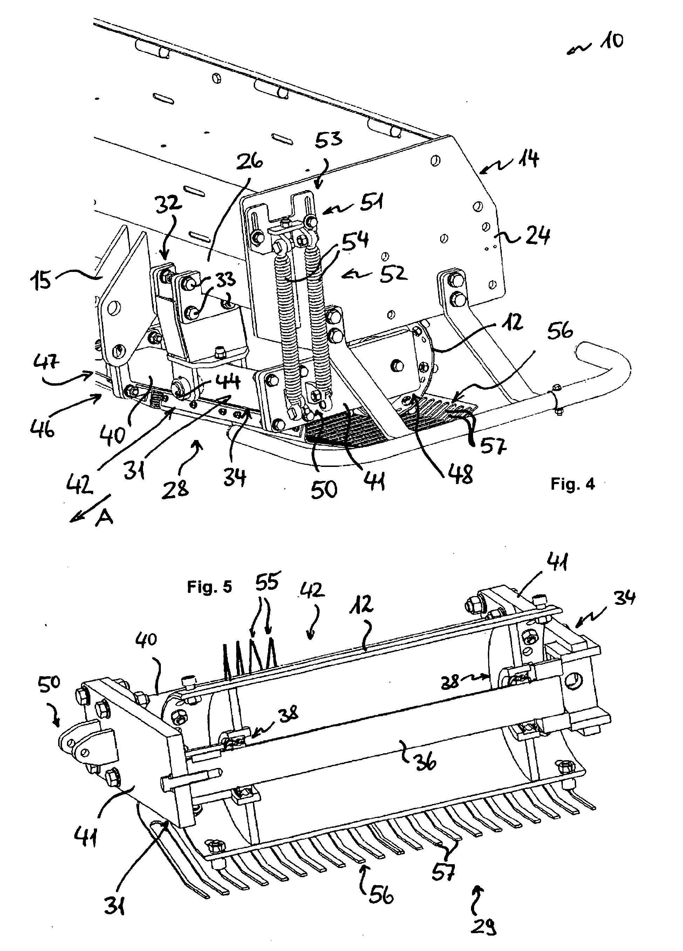

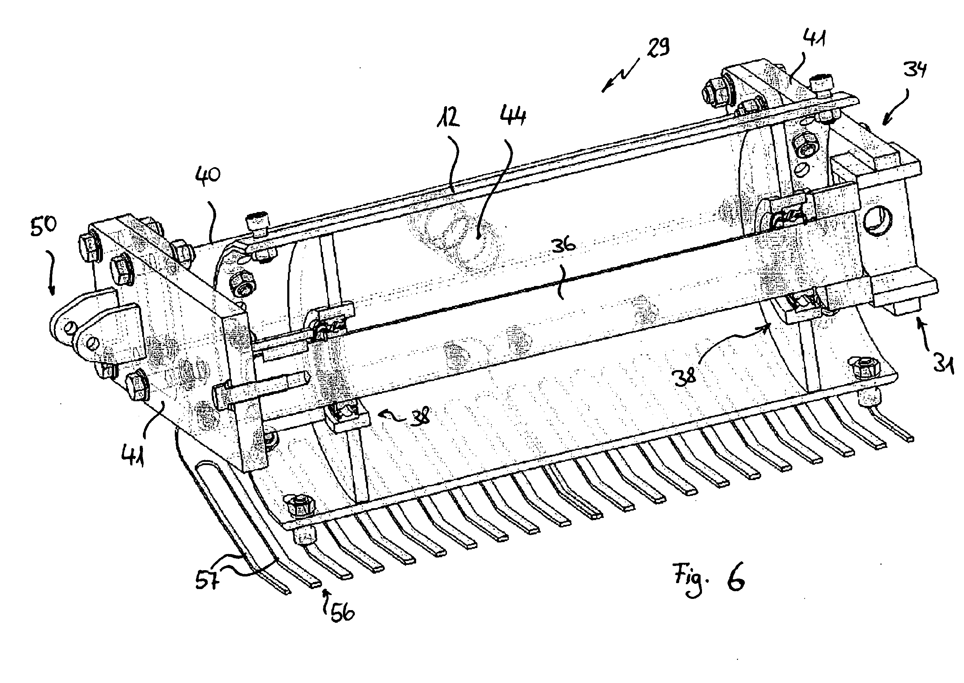

Die Anlenkung der ersten Werkzeugeinheiten 28, 29 an dem Geräterahmen 14 mit der Kipplagereinrichtung 32 ist genauer in Fig. 4 dargestellt. Der Aufbau der ersten Werkzeugeinheiten 28, 29 selbst ist genauer in Fig. 5 und 6 dargestellt.

Die Lagereinrichtungen 31 der ersten Werkzeugeinheiten 28, 29 weisen jeweils ein Rahmenelement 34 mit einer im wesentlichen quer zur Bewegungsrichtung des Bodenbearbeitungsgeräts 10 angeordneten Stange 36 als Achselement auf. Auf den Stangen 36 sitzen jeweils (wenigstens) zwei Kugellager 38, über die die Rollen- oder Walzenelemente, wie insbesondere die Igelwalzen 12, jeweils frei drehend auf der Stange 36 gelagert sind. Die Rahmenelemente 34 sind über die Kipplagereinrichtungen 32 kipp- oder schwenkbar mit dem Querträger 26 verbunden. Hierzu weisen die Rahmenelemente 34 noch eine vordere Verbindungsstange 40 auf, an deren mittleren Bereich 42 die Kipplagereinrichtung 32 angreift. Seitlich sind die Rahmelemente 34 jeweils durch Platten 41 verstärkt.

Auf diese Weise sind die ersten Werkzeugeinheiten 28, 29 insgesamt mit ihrem etwa mittleren Bereich 42 um eine im wesentlichen parallel zur Bewegungsrichtung A verlaufende Kippachse 44 herum relativ zu dem Geräterahmen 14 kippoder schwenkbar. Dementsprechend sind ein jeweils zu der anderen ersten Werkzeugeinheit 29, 28 gerichteter erster Endbereich 46 jeder der ersten Werkzeugeinheiten 28, 29 und ein als freier Endbereich ausgebildeter, jeweils von der anderen ersten Werkzeugeinheit 29, 28 abgewandter zweiter Endbereich 48 jeder der ersten Werkzeugeinheiten 28, 29 nach oben und nach unten schwenkbar.

Die Rahmenelemente 34 weisen Anlenkeinrichtungen 50, 50a zum Anlenken einer Vorspanneinrichtung 52 und Teilen der zweiten Werkzeugeinheiten 30 auf. In dem vorliegenden Beispiel sind die Rahmenelemente 34 der beiden ersten Werkzeugeinheiten 28, 29 jeweils spiegelbildlich zueinander ausgebildet. Dabei sind die Anlenkeinrichtungen 50, 50a an den beiden Endbereichen 46, 48 als mit Bolzenöffnungen versehene Flansche an den Platten 41 ausgebildet. An der Anlenkeinrichtung 50a an dem als Anlenkbereich 47 für die zweite Werkzeugeinheit 30 wirkenden ersten Endbereich 46 ist ein Teil der zweiten Werkzeugeinheit 30 schwenk- oder kippbar angelenkt. An der entgegengesetzt gerichteten Anlenkeinrichtung 50 an dem zweiten, freien Endbereich 48 ist eine Vorspanneinrichtung 52 angelenkt.

Die Vorspanneinrichtung 52 weist in dem hier dargestellten Ausführungsbeispiel Federelemente in Form von jeweils zwei Schraubenzufedern 54 auf, die mit einem Ende an dem Geräterahmen 14 (hier an dem Plattenelement 24) und mit dem anderen Ende an der Anlenkeinrichtung 50 befestigt sind, wie dies am besten aus Fig. 4 hervorgeht. Die Vorspanneinrichtung 52 weist weiter eine Einstelleinrichtung 53 zum Einstellen der Vorspannung auf. In dem dargestellten Beispiel weist die Einstelleinrichtung 53 einen über eine Langlochverbindung oder dergleichen lageveränderlich an dem Geräterahmen 14 befestigbaren Federsitz 51 auf.

Jede Werkzeugeinheit 28, 29, 30 weist weiter noch eine mehr oder weniger elastische Abstützeinheit 56 mit sich entlang der Bewegungsrichtung A erstreckenden Zungen oder Gitterstäben 57 auf, die auf dem Boden gleitend einen Mindestabstand der Lagereinrichtungen 31 zu dem Boden aufrechterhalten und damit die Einstechtiefe von an den Igelwalzen 12 radial abstrebenden Stechwerkzeugen 55 begrenzen.

Die Stechwerkzeuge 55 sind in der Regel stachelförmig an der gesamten Umfangsfläche 13 der Igelwalzen 12 verteilt, in den beigefügten Darstellungen sind der Übersicht halber nur ein paar Stück angedeutet gezeigt.

Die Abstandseinheiten 56 sind bei den ersten Werkzeugeinheiten 28, 29 an deren Rahmenelementen 34 befestigt. Die Abstandseinheit 56 der zwischen den beiden ersten Werkzeugeinheiten 28 befindlichen zweiten Werkzeugeinheit 30 ist an den jeweiligen ersten Endbereichen 46 an der dortigen Anlenkeinrichtung 50a schwenkbar angelenkt.

Die Lagereinrichtung 31 der zweiten Werkzeugeinheit 30 ist im wesentlichen aus einer als Achselement für das mittlere Rollen- oder Walzenelement dienenden Stange 37 gebildet, die vergleichbar zu den Stangen 36 ausgebildet ist und ebenfalls (wenigstens) zwei Kugellager 38 trägt.

In dem hier dargestellten Ausführungsbeispiel ist die zweite Werkzeugeinheit 29 damit im wesentlichen aus der Abstandseinheit 56 (in Form eines Gitterelements), der Stange 37 und der mittleren Igelwalze 12 gebildet. Dazu sind die Enden der Stange 37 der zweiten Werkzeugeinheit 30 schwenkbar an die einander zugewandten Enden der Stangen 36 der beiden ersten Werkzeugeinheiten 28, 30 angelenkt.

Diese Schwenkanlenkung ist genauer in Fig. 3 dargestellt. Wie daraus ersichtlich, weist ein erstes Ende der Stange 37 der zweiten Werkzeugeinheit 29 axial gerichtete Schlitze 58 auf, in die ein an der benachbarten Stange 36 angebrachter Bolzen 60 eingreift. An dem gegenüberliegenden zweiten Ende der Stange 37 der zweiten Werkzeugeinheit 30 sind die beiden Stangen 36, 37 über eine Bolzenverbindung 62 zueinander schwenkbar miteinander verbunden.

Insgesamt sind alle drei Stangen 36, 37 in Querrichtung aufeinander folgend jeweils endseitig zueinander schwenkbar verbunden, wobei durch die Verbindung zwischen Schlitz 58 und Bolzen 60 ein Längenausgleich beim Relativ-Verkippen der Werkzeugeinheiten 28, 29, 30 erfolgen kann. Die Kugellager 38 sitzen auf den jeweiligen Stangen 36, 37 so dass so auch die drei Igelwalzen 12 relativ zueinander kippbar sind.

Die Vorspanneinrichtung 52 dient dazu, die jeweiligen einander zugewandten ersten Endbereiche 46 der ersten Werkzeugeinheiten 28, 30, die als Anlenkbereiche 47 zum Anlenken der zweiten Werkzeugeinheit 29 dienen, in Richtung auf den Boden vorzuspannen. Dadurch wird die zweite Werkzeugeinheit 29 zusätzlich nach unten vorgespannt, wodurch eine mehr einheitliche Last auf alle Rollenoder Walzenelemente über die Gesamtbreite des Bodenbearbeitungsgerätes 10 erhältlich ist. Dadurch, dass die Vorspanneinrichtung 52 an den ersten, unmittelbar am Geräterahmen 14 angelenkten Werkzeugeinheiten 28, 29 angreift, kann sie als einfache Federeinheit mit einfachen Federsitzen ausgebildet werden, die leicht montierbar, herstellbar und handhabbar, insbesondere einstellbar ist.

Diese Lagereinrichtung 31 der zweiten Werkzeugeinheit 30 ist im wesentlichen aus einer als Achselement für das mittlere Rollen- oder Walzenelement dienenden Stange 37 gebildet, die vergleichbar zu den Stangen 36 ausgebildet ist und ebenfalls (wenigstens) zwei Kugellager 38 trägt.

Mit dem hier dargestellten Bodenbearbeitungsgerät 10 ist somit ein sogenanntes "Igeln" von Rasenflächen oder dergleichen mittels einer mit Stacheln versehenen drehbaren Rollen- oder Walzeneinheit, die über den Boden unter Einstechen der Stacheln in den Boden abrollbar ist, durchführbar. Die gesamte Rollen- oder Walzeneinheit ist zwecks Anpassung an Bodenunebenheiten mehrteilig, insbesondere dreiteilig ausgebildet. Die Einzelsegmente, d.h. hier die einzelnen Igelwalzen 12, sitzen jedoch jetzt in einer "Linie" im Gegensatz zu der früheren in Fahrtrichtung versetzten Ausführung.

Um dies zu erreichen, wurde eine wie eine Welle oder Achse ausgebildete Lagervorrichtung kardanisch ausgebildet, nämlich durch Aufteilung in die nun zueinander kippbaren mehreren Lagereinrichtungen 31. Die mehreren Walzenelemente - Igelwalzen 12 - sind durch Kugellager 38 auf den jeweiligen Achsabschnitten - Stangen 36, 37 - gelagert.

Bei einer mehr als zweiteiligen, hier insbesondere dreiteiligen Ausführung der Walzenelemente gibt es immer die Problematik, einen gleichmäßigen Bodendruck über alle Elemente hinweg zu erreichen.

Durch Vorspannen der jeweils äußeren Walzenelemente wird das mittlere Walzenelement über eine Vorspanneinrichtung 52 - hier jeweils ein Federpaar jeweils rechts und links der Geräterahmenaussenseite - vorgespannt. Drehpunkt ist dabei der mittige Aufhängungspunkt - Kippachse 44 - des jeweiligen äußeren Walzenelements. Durch das Angreifen der Federn an der möglichst weit außen angebrachten Anschlusseinrichtung 50 ergibt sich ein günstiger Hebel, so dass mit relativ geringen Federkräften eine ausreichende Vorspannungkraft erzielbar ist.

### Bezugszeichenliste

- 10: Bodenbearbeitungsgerät
- 12: Igelwalzen (Rollen- oder Walzenelement)
- 14: Geräterahmen
- 15: Anschlusselement für Dreieckslenkeranlenkung
- 16: Befestigungseinrichtung für Nachlaufgeräte
- 18: Nachlaufgerät
- 20: Nachlaufwalzeneinheit
- 22: Nachlaufwalzen
- 24: Plattenelement (Geräterahmen)
- 26: Querträger (Geräterahmen)
- 28: erste Werkzeugeinheit
- 29: zweite Werkzeugeinheit
- 30: erste Werkzeugeinheit
- 31: Lagereinrichtung
- 32: Kipplagereinrichtung
- 33: Schrauben
- 34: Rahmenelement
- 36: Stange (erste Werkzeugeinheiten)
- 37: Stange (zweite Werkzeugeinheit)
- 38: Kugellager
- 40: Verbindungsstange
- 41: seitliche Platten
- 42: mittlerer Bereich
- 44: Kippachse
- 46: erster Endbereich
- 47: Anlenkbereich
- 48: zweiter Endbereich (freies Ende)
- 50: Anlenkeinrichtung
- 50a: Anlenkeinrichtung
- 51: Federsitz
- 52: Vorspanneinrichtung
- 53: Einstelleinrichtung
- 54: Schraubenzugfeder
- 56: Abstandseinheit (hier in Form eines Rostes oder Gitters)
- 57: Gitterstäbe
- 58: Schlitz
- 60: Bolzen
- 62: Bolzenverbindung
- A: Bewegungsrichtung

## Patentansprüche

1. In einer Bewegungsrichtung (A) bewegbares Bodenbearbeitungsgerät (10) mit:
mehreren Werkzeugeinheiten (28, 29, 30), die jeweils wenigstens ein drehbar gelagertes Wellen-, Rollen- oder Walzenelement (12) zur Bodenbearbeitung aufweisen, wobei die Werkzeugeinheiten (28, 29, 30) in einer im wesentlichen quer zur Bewegungsrichtung (A) verlaufenden Richtung aufeinanderfolgend nebeneinander angeordnet sind, und
einem Geräterahmen (14), an dem die Werkzeugeinheiten angelenkt sind, wobei zwischen ersten Werkzeugeinheiten (29, 29), die kipp- und/oder schwenkbar an dem Geräterahmen (14) angelenkt sind, wenigstens eine zweite Werkzeugeinheit (30) vorgesehen ist, die zwecks lageveränderlicher mittelbarer Anlenkung an dem Geräterahmen (14) an wenigstens einer der ersten Werkzeugeinheiten (28, 29) relativ zu dieser kipp- und/oder schwenkbar angelenkt ist,
**dadurch gekennzeichnet,**
**dass** ein Anlenkbereich (46) wenigstens einer der ersten Werkzeugeinheiten (28, 29), an dem die zweite Werkzeugeinheit (30) an dieser ersten Werkzeugeinheit (28, 29) angelenkt ist, relativ zu dem Geräterahmen (14) in Richtung Boden elastisch vorgespannt ist.

2. Bodenbearbeitungsgerät nach Anspruch 1,
**dadurch gekennzeichnet,**
**dass** die Wellen-, Rollen- oder Walzenelemente (12) für die Glättung, Lockerung und/oder Belüftung von Böden, mehr insbesondere im Bereich einer Grasnarbe, ausgebildet sind.

3. Bodenbearbeitungsgerät nach einem der voranstehenden Ansprüche,
**dadurch gekennzeichnet,**
**dass** die Wellen-, Rollen- oder Walzenelemente (12) zum Rollen über den Boden bei Bewegung des Bodenbearbeitungsgeräts (10) drehbar an ihren zugeordneten Werkzeugeinheiten gelagert sind.

4. Bodenbearbeitungsgerät nach einem der voranstehenden Ansprüche,
**dadurch gekennzeichnet,**
**dass** an dem Umfang der Wellen-, Rollen- oder Walzenelemente (12) eine Vielzahl von Stechwerkzeuge (55) mit zumindest einer Richtungskomponente in eine radiale Richtung abragend angeordnet sind.

5. Bodenbearbeitungsgerät nach Anspruch 4,
**dadurch gekennzeichnet,**
**dass** die Wellen-, Rollen- oder Walzenelemente als Igelwalzen (12) ausgebildet sind, bei der die Stechwerkzeuge (55) über den Umfang verteilt angeordnet sind.

6. Bodenbearbeitungsgerät nach einem der voranstehenden Ansprüche,
**dadurch gekennzeichnet,**
**dass** die wenigstens eine erste Werkzeugeinheit zwischen zwei ersten Werkzeugeinheiten (28, 29) angelenkt ist.

7. Bodenbearbeitungsgerät nach einem der voranstehenden Ansprüche,
**dadurch gekennzeichnet,**
**dass** bei mehr als zwei ersten Werkzeugeinheiten (28, 29) die wenigstens eine zweite Werkzeugeinheit (30) jeweils zwischen zweien der ersten Werkzeugeinheiten (28, 29) angeordnet ist.

8. Bodenbearbeitungsgerät nach einem der voranstehenden Ansprüche,
**dadurch gekennzeichnet,**
**dass** zwischen zwei ersten Werkzeugeinheiten (28, 29) je lediglich eine zweite Werkzeugeinheit (30) angelenkt ist, die mit ihrem ersten in Richtung quer zur Bewegungsrichtung gesehenen Ende an dem Anlenkbereich (46) der einen ersten Werkzeugeinheit (28) und mit ihrem dem ersten Ende entgegengerichteten zweiten Ende an dem Anlenkbereich (46) der anderen ersten Werkzeugeinheit (29) angelenkt sind.

9. Bodenbearbeitungsgerät nach einem der voranstehenden Ansprüche,
**dadurch gekennzeichnet,**
**dass** die Werkzeugeinheiten (28, 29, 30) derart aneinander angelenkt sind, dass die Drehachsen der Wellen-, Walzen- oder Rollenelemente (12) aufeinanderfolgender Werkzeugeinheiten (28, 29, 30) zur Bewegung über einen ebenen Boden im wesentlichen konzentrisch zueinander ausrichtbar sind, jedoch zur Anpassung an Bodenunebenheiten zueinander verkippbar sind.

10. Bodenbearbeitungsgerät nach einem der voranstehenden Ansprüche,
**dadurch gekennzeichnet,**
**dass** die Werkzeugeinheiten (28, 29, 30) jeweils eine drehfeste Lagereinrichtung (31) und wenigstens eines der Wellen-, Rollen- oder Walzenelemente (12) aufweisen, wobei die Lagereinrichtung (31) mittelbar oder unmittelbar an dem Geräterahmen (14) relativ zu diesem kipp- und/oder schwenkbar und/oder anheb- oder senkbar angelenkt ist, und das wenigstens eine Wellen-, Rollen- oder Walzenelement (14) auf oder in der Lagereinrichtung (31) drehbar gelagert ist.

11. Bodenbearbeitungsgerät nach Anspruch 10,
**dadurch gekennzeichnet,**
**dass** die Lagereinrichtung (31) ein in das wenigstens eine Rollen- oder Walzenelement (12) hineingreifendes Achselement (36, 37) aufweist.

12. Bodenbearbeitungsgerät nach Anspruch 11,
**dadurch gekennzeichnet,**
**dass** das Achselement (36, 37) mit wenigstens einem Gleit- oder Wälzkörperlager (38) zur freien Drehlagerung des zugeordneten Rollen- oder Walzenelements (12) versehen ist.

13. Bodenbearbeitungsgerät nach einem der voranstehenden Ansprüche
**dadurch gekennzeichnet,**
**dass** die ersten Werkzeugeinheiten (28, 29) mit einem in Richtung quer zur Bewegungsrichtung (A) gesehen etwa mittleren Bereich (42) kipp- oder schwenkbar an dem Geräterahmen (14) angelenkt sind, so dass ein erster Endbereich (46) und ein zweiter Endbereich (48) in einer vertikalen Richtung zu dem Geräterahmen (14) hin und von diesem weg schwenkbar sind.

14. Bodenbearbeitungsgerät nach Anspruch 13,
**dadurch gekennzeichnet,**
**dass** der erste Endbereich (46) den Anlenkbereich (47) bildet, an dem die benachbarte zweite Werkeinheit (30) angelenkt ist.

15. Bodenbearbeitungsgerät nach Anspruch 13 oder 14,
**dadurch gekennzeichnet,**
**dass** der zweite Endbereich (48) ein freier Endbereich ist.

16. Bodenbearbeitungsgerät nach einem der voranstehenden Ansprüche,
**dadurch gekennzeichnet,**
**dass** eine Vorspanneinrichtung (52) vorgesehen ist, die eine zugeordnete erste Werkzeugeinheit (28, 29) in einer der Kipp- oder Schwenkrichtungen derart vorspannt, dass der Anlenkbereich (47) in Richtung Boden vorgespannt ist.

17. Bodenbearbeitungsgerät nach Anspruch 15 und nach Anspruch 16,
**dadurch gekennzeichnet,**
**dass** die Vorspanneinrichtung (52) an dem freien Endbereich (48) der ersten Werkzeugeinheit (28, 29) angreift.

18. Bodenbearbeitungsgerät nach einem der Ansprüche 16 oder 17,
**dadurch gekennzeichnet,**
**dass** die Vorspanneinrichtung (52) wenigstens ein Federelement (54) aufweist, das einenends mit dem Geräterahmen (14) und anderenends mit der ersten Werkzeugeinheit (28, 29) in Eingriff ist.

19. Bodenbearbeitungsgerät nach einem der voranstehenden Ansprüche,
**dadurch gekennzeichnet,**
**dass** zum Anlenken der zweiten Werkzeugeinheit (30) an einer der ersten Werkzeugeinheit (28, 29) ein Kipp- oder Schwenklager vorgesehen ist, welches derart ausgebildet und angeordnet ist, dass ein Verkippen oder Verschwenken der benachbarten Werkzeugeinheiten (28, 30; 29, 30) zueinander um eine im wesentlichen in Bewegungsrichtung gerichtete Kipp- oder Schwenkachse ermöglicht ist.

20. Bodenbearbeitungsgerät nach einem der voranstehenden Ansprüche,
**dadurch gekennzeichnet, dass** in einem Verbindungsbereich zwischen zwei aneinander angelenkten Werkzeugeinheiten (28, 30) eine Längenausgleichseinrichtung (58, 60) zum Längenausgleich beim Verkippen von Werkzeugeinheiten (28, 29, 30) vorgesehen ist.

## Claims

1. Soil working apparatus (10) that is movable in one direction of travel (A), having:
a plurality of tool units (28, 29, 30) each of which comprises at least one rotatably mounted shaft, roll or roller element (12) for working the soil, wherein the tool units (28, 29, 30) are arranged side by side one after the other in a direction running substantially at right angles to the direction of travel (A), and
an apparatus frame (14) to which the tool units are jointed, while between first tool units (29, 29) which are jointed to the apparatus frame (14) in tiltable or swivellable manner, is provided at least one second tool unit (30) which in order to be indirectly jointed to the apparatus frame (14) in a variable position is jointed to at least one of the first tool units (28, 29) so as to be tiltable or swivellable relative thereto,
**characterised in that**
a jointing region (46) of at least one of the first tool units (28, 29) to which the second tool unit (30) is jointed at this first tool unit (28, 29), is resiliently biased towards the ground relative to the apparatus frame (14).

2. Soil working apparatus according to claim 1, **characterised in that** the shaft, roll or roller elements (12) are constructed for smoothing, loosening and/or aerating soils, more particularly in the region of an expanse of grass.

3. Soil working apparatus according to one of the preceding claims, **characterised in that** the shaft, roll or roller elements (12) are rotatably mounted on their associated tool units for rolling over the ground as the soil working apparatus (10) moves along.

4. Soil working apparatus according to one of the preceding claims, **characterised in that** around the circumference of the shaft, roll or roller elements (12) are arranged a plurality of piercing tools (55) projecting with at least one directional component in a radial direction.

5. Soil working apparatus according to claim 4, **characterised in that** the shaft, roll or roller elements (12) are constructed as spike rollers (12) in which the piercing tools (55) are distributed over the circumference.

6. Soil working apparatus according to one of the preceding claims, **characterised in that** the at least one first tool unit is jointed on between two first tool units (28, 29).

7. Soil working apparatus according to one of the preceding claims, **characterised in that** if there are more than two first tool units (28, 29) the at least one second tool unit (30) is arranged in each case between two of the first tool units (28, 29).

8. Soil working apparatus according to one of the preceding claims, **characterised in that** only one second tool unit (30) is jointed on between two first tool units (28, 29) in each case, these second tool units being jointed by their first end, viewed at right angles to the direction of travel, on the jointing region (46) of one first tool unit (28) and by their second end, which is in the opposite direction to the first end, on the jointing region (46) of the other first tool unit (29).

9. Soil working apparatus according to one of the preceding claims, **characterised in that** the tool units (28, 29, 30) are jointed to one another such that the rotation axes of the shaft, roll or roller elements (12) of successive tool units (28, 29, 30) can be aligned substantially concentrically with one another, for travelling over even ground, but can be tilted relative to one another to adapt to uneven ground.

10. Soil working apparatus according to one of the preceding claims, **characterised in that** the tool units (28, 29, 30) each have a non-rotational mounting device (31) and at least one of the shaft, roll or roller elements (12), the mounting device (31) being jointed directly or indirectly to the apparatus frame (14) so as to be tiltable and/or swivellable relative thereto and/or capable of being raised or lowered, and at least one shaft, roll or roller element (14) is rotatably mounted on or in the mounting device (31).

11. Soil working apparatus according to claim 10, **characterised in that** the mounting device (31) has an axle element (36, 37) that engages into the at least one roll or roller element (12).

12. Soil working apparatus according to claim 11, **characterised in that** the axle element (36, 37) is provided with at least one slide or roller bearing (38) for the free rotatable mounting of the associated roll or roller element (12).

13. Soil working apparatus according to one of the preceding claims, **characterised in that** the first tool units (28, 29) are jointed to the apparatus frame (14) so as to be tiltable or swivellable, by a substantially central region (42) viewed in the direction at right angles to the direction of travel (A), so that a first end region (46) and a second end region (48) are pivotable in a vertical direction towards and away from the apparatus frame (14).

14. Soil working apparatus according to claim 13, **characterised in that** the first end region (46) forms the jointing region (47) to which the adjacent second tool unit (30) is jointed.

15. Soil working apparatus according to claim 13 or 14, **characterised in that** the second end region (48) is a free end region.

16. Soil working apparatus according to one of the preceding claims, **characterised in that** a biasing device (52) is provided which biases an associated first tool unit (28, 29) in one of the directions of tilting or swivelling such that the jointing region (47) is biased towards the ground.

17. Soil working apparatus according to claim 15 and claim 16, **characterised in that** the biasing device (52) acts on the free end region (48) of the first tool unit (28, 29).

18. Soil working apparatus according to one of claims 16 or 17, **characterised in that** the biasing device (52) comprises at least one spring element (54) which engages at one end with the apparatus frame (14) and at the other end with the first tool unit (28, 29).

19. Soil working apparatus according to one of the preceding claims, **characterised in that** for jointing the second tool unit (30) at one of the first tool units (28, 29) a tilt or swivel bearing is provided which is constructed and arranged so that it is possible for the adjacent tool units (28, 30; 29, 30) to tilt or swivel relative to one another about a tilt or swivel axis directed substantially in the direction of travel.

20. Soil working apparatus according to one of the preceding claims, **characterised in that** in a connecting region between two tool units (28, 30) articulated to one another, a length compensating device (58, 60) is provided for compensating length during the tilting of tool units (28, 29, 30).

## Revendications

1. Appareil de traitement des sols (10) mobile dans une direction de déplacement (A) comprenant :
- plusieurs unités d'outils (28, 29, 30) ayant chacune au moins des éléments d'arbres, de rouleaux ou de cylindres (12) pour le traitement du sol, les unités d'outils (28, 29, 30) étant disposées à la suite les unes des autres côte-à-côte dans une direction essentiellement transversale à la direction de déplacement (A), et
- un châssis (14) auquel sont articulées les unités d'outils, dans lequel entre la première unité d'outil (28, 29) qui pour être articulée de manière indirecte, variable en position au châssis (14), est articulée à au moins l'une des premières unités d'outil (28, 29) de manière pivotante et/ou basculante,
**caractérisé en ce que**
- une zone d'articulation (46) d'au moins une des premières unités d'outil (28, 29) est précontrainte élastiquement par rapport au châssis (14) en direction du sol, zone d'articulation par laquelle la seconde unité d'outil (30) est articulée à la première unité d'outil (28, 29).

2. Appareil de traitement des sols selon la revendication 1,
**caractérisé en ce que**
les éléments d'arbres, de rouleaux ou de cylindres (12) sont réalisés pour le lissage, l'ameublement et/ou l'aération de sols, et plus particulièrement dans une surface sans gazon.

3. Appareil de traitement des sols selon l'une des revendications précédentes,
**caractérisé en ce que**
les éléments d'arbres, de rouleaux ou de cylindres (12) sont montés à rotation à leur unité d'outil correspondante pour rouler sur le sol lors du déplacement de l'appareil de traitement des sols (10).

4. Appareil de traitement des sols selon l'une des revendications précédentes,
**caractérisé en ce qu'**
à la périphérie des éléments d'arbres, de rouleaux ou de cylindres (12), se trouvent un grand nombre d'outils de piquage (55) avec au moins une composante de direction en saillie dans la direction radiale.

5. Appareil de traitement des sols selon la revendication 4,
**caractérisé en ce que**
les éléments d'arbres, de rouleaux ou de cylindres (12), sont réalisés sous la forme de cylindres hérissons (12), dans lesquels les outils de piquage (55) sont répartis sur la périphérie.

6. Appareil de traitement des sols selon l'une des revendications précédentes,
**caractérisé en ce qu'**
au moins une unique unité d'outil est articulée entre deux premières unités d'outils (28, 29).

7. Appareil de traitement des sols selon l'une des revendications précédentes,
**caractérisé en ce que**
dans le cas ou il y a plus de deux premières unités d'outils (28, 29), au moins l'unique seconde unité d'outil (30) est à chaque fois disposée entre deux des premières et secondes unités d'outils (28, 29).

8. Appareil de traitement des sols selon l'une des revendications précédentes,
**caractérisé en ce qu'**
à chaque fois, au moins une seconde unité d'outil (30) est articulée entre deux premières unités d'outils (28, 29), la seconde unité (30) est articulée à sa première extrémité par rapport à la direction transversale à la direction de déplacement, à une zone d'articulation (46) d'une première unité d'outil (28) et par sa seconde extrémité opposée à la première extrémité à une zone d'articulation (46) à l'autre première unité d'outil (29).

9. Appareil de traitement des sols selon l'une des revendications précédentes,
**caractérisé en ce que**
les unités d'outils (28, 29, 30) sont articulées entre-elles de sorte que les axes de rotation des arbres, rouleaux ou cylindres (12) des unités d'outils (28, 29, 30) se suivant, peuvent s'aligner entre-elles sur un sol plan essentiellement concentrique les unes par rapport aux autres, tout en pouvant basculer les unes par rapport aux autres pour s'adapter aux imperfections du sol.

10. Appareil de traitement des sols selon l'une des revendications précédentes,
**caractérisé en ce que**
les unités d'outils (28, 29, 30) ont chacune une installation de palier (31) fixe en rotation et au moins l'un des éléments d'arbres, de rouleaux ou de cylindres (12), l'installation de palier (31) est articulé directement ou indirectement au châssis (14), de manière pivotante et/ou basculante et/ou relevable ou abaissable, et qu'au moins un élément d'arbres, de rouleaux ou de cylindres (12) est monté à rotation sur ou dans l'installation de palier (31).

11. Appareil de traitement des sols selon la revendication 10,
**caractérisé en ce que**
l'installation de palier (31) a un élément d'axe (36, 37) venant en prise dans un élément de rouleaux ou de cylindres (12).

12. Appareil de traitement des sols selon la revendication 11,
**caractérisé en ce que**
l'élément d'axe (36, 37) a au moins un palier lisse ou palier à roulement (38) pour un positionnement rotatif libre de l'élément de rouleaux ou de cylindres (12) associé.

13. Appareil de traitement des sols selon l'une des revendications précédentes,
**caractérisé en ce que**
les premières unités d'outils (28, 29) sont articulées basculantes ou pivotantes au châssis (14) par une zone (42) sensiblement médiane dans la direction transversale à la direction de déplacement (A), de sorte qu'une première zone d'extrémité (46) et une seconde zone d'extrémité (48) sont pivotantes dans un sens ou dans l'autre dans une direction verticale par rapport au châssis (14).

14. Appareil de traitement des sols selon la revendication 13,
**caractérisé en ce que**
la première zone d'extrémité (46) constitue la zone d'articulation (47) à laquelle est articulée la seconde unité d'outil (30).

15. Appareil de traitement des sols selon la revendication 13 ou 14,
**caractérisé en ce que**
la seconde extrémité (48) est une extrémité libre.

16. Appareil de traitement des sols selon l'une des revendications précédentes,
**caractérisé par**
une installation de précontrainte (52) qui précontraint une première unité d'outil (28, 29) associée dans la direction de basculement ou de pivotement, de sorte que la zone d'articulation (47) soit précontrainte dans la direction du sol.

17. Appareil de traitement des sols selon l'une des revendications 15 et 16,
**caractérisé en ce que**
l'installation de précontrainte (52) est en prise à l'extrémité libre (48) de la première unité d'outil (28, 29).

18. Appareil de traitement des sols selon la revendication 16 ou 17,
**caractérisé en ce que**
l'installation de précontrainte (52) a au moins un élément de ressort (54) qui est en prise d'un côté avec le châssis (14) et de l'autre côté avec la première unité d'outil (28, 29).

19. Appareil de traitement des sols selon l'une des revendications précédentes,
**caractérisé par**
un palier de basculement ou de pivotement pour articuler la seconde unité d'outil (30) à l'une des premières unité d'outil (28, 29), ce palier étant réalisé et positionné pour permettre un basculement ou un pivotement des unités d'outils voisines (28, 29, 30) autour d'un axe de basculement ou de pivotement essentiellement dirigé dans la direction de déplacement.

20. Appareil de traitement des sols selon l'une des revendications précédentes,
**caractérisé par**
une installation de compensation de longueur (58, 60) pour compenser la longueur lors du basculement des unités d'outils (28, 29, 30) dans la zone de liaison entre deux unités d'outils articulées entre-elles (28, 30).
